# EUROPEAN PATENT SPECIFICATION

(11) **EP 2 820 991 B1**
(45) Date of publication and mention of the grant of the patent: **22.05.2019**
(21) Application number: 14175426.7
(22) Date of filing: 02.07.2014
(51) Int. Cl.: A47L 9/28, A47L 9/00, A47L 9/19, G01F 23/20

(54) **Vacuum cleaner with emptying indicator**
Staubsauger mit Entleerungsanzeiger
Aspirateur avec indicateur de vidage

(30) Priority: 03.07.2013 DK 201370371
(43) Date of publication of application: 07.01.2015
(73) Proprietor: V.Brøndum A/S, 8600 Silkeborg (DK)
(72) Inventor: Madsen, Ole, 8654 Bryrup (DK)
(74) Representative: Olesen, Birthe Bjerregaard

(56) References cited:
- DE-A1-102012 110 758
- US-A- 2 174 604
- US-A- 2 300 705
- US-A- 2 496 180
- US-A- 5 235 325

## Description

### Field of the Invention

The present invention concerns a vacuum cleaner containing at least one electric motor for driving at least one air pump, the air pump sucking air through at least one filter communicating with a receiver, the receiver being equipped with a suction branch connecting a suction hose to the operating/suction area of the vacuum cleaner, the vacuum cleaner being equipped with a control that emits a signal when a weight amount of suction material corresponding to the set amount desired at emptying has been sucked off or collected, the control based on means for measuring the increase in weight of the vacuum cleaner and including at least one operating panel in which a desired value for emptying signal can be set, the vacuum cleaner including means for measuring the weight of suction material in receiver and a display for displaying a signal.

The present invention also concerns a method for indicating a desired degree of filling of a receiver in a vacuum cleaner.

### Background of the Invention

Many vacuum cleaners are equipped with a filter bag that retains the sucked suction material, ensuring, possibly via a subsequent fine filter, that the exhaust air is defensible relative to the surrounding environment. By emptying, this filter bag is replaced and at appropriate intervals possibly the subsequent fine filter as well.

If a vacuum cleaner with filter bag is overfilled, it may occur that the filter bag is ruptured and cause that the collected suction material contaminates the succeeding components and eventually is emitted to the ambient environment, though overfilling will most often only result in reduction of the suction capability.

For vacuum cleaners with filter bag there is often seen an indicator that indicates when the filter bag is full and should be replaced. Such indicators are typically based on a measurement of the suction pressure and do not actually inform about how much suction material has been collected or which degree of filling there is achieved, but instead how clogged the filter in the filter bag has become.

Most industrial vacuum cleaners can be provided with a filter bag but may also operate without such. If the vacuum cleaner is used without a bag, the suction material is typically collected in a container which can be dismounted, emptied and reused.

If a vacuum cleaner without filter bag is not emptied in time and thereby becomes overfilled, it can mean much use of time for subsequent cleaning of the vacuum cleaner and replacement or cleaning of subsequent fine filters.

To this is added that the collected dust or suction material can be a health hazard, making the cleaning of the vacuum cleaner further complicated and resource demanding.

It is thus not desirable to overfill the vacuum cleaner, but on the other hand it is not desirable to perform frequent disassembly in order to check if it is to be emptied as this is regarded as an unnecessary interruption of the work process, thus lowering the efficiency.

In the EU, the standards for how much a person is allowed to lift, hold, carry, pull and push are continuously changed towards "less manually handled weight".

If the vacuum cleaner itself can indicate when the weight limit for handling in connection with emptying is reached, it will effectively facilitate the vacuum cleaner operator's meeting these standards.

There may be a great difference in density of the collected grinding dust or suction material; for example, 1 kg of suction material from wood floor grinding takes up much more space that 1 kg of grinding material from concrete floor planing. Since the rules stipulate that the weight sets the limit for handling the suction material, it is - particularly by suction material with high density - not a question about when the receiver is full, but rather that the right weight has been collected and emptying is to be performed.

By e.g. concrete floor planing there may be appreciable amounts of suction material, up to 9 metric tons a day are not uncommon when renovating factory floorings.

If the emptying is to be performed e.g. for every 15 kg, it means that up to 600 emptyings are to be performed every day.

Vacuum cleaners with level control in the receiver are known in connection with liquid collection, but these systems are not suited for dry dust.

Level measurement in e.g. silos is a well-known problem from handling powders, granulate and similar solid particles in the process industry as the material will not, like liquids, have a horizontal surface level indicating the degree of filling.

Here, e.g. radar and ultrasound based sensors are used which can indicate the degree of filling, though weighing is also used.

In the receiver of a vacuum cleaner, relatively violent turbulent air flows prevail, and the atmosphere is filled with particles of different sizes.

Most of the particles are deposited but quite a number of them are kept hovering in the air flows and will thus disturb the radar and ultrasound based sensors, which in addition are relatively expensive.

Controlling the filling level in a vacuum cleaner based on radar or ultrasound sensors or weighing has, as far as we know, not been marketed previously.

CN 1951295 A discloses a vacuum cleaner containing means for measuring the weight of the dust in the dust container and a display for displaying a signal.

US 2300705 A, US 2496180 A and US 2174604 A discloses vacuum cleaners containing non-adjustable emptying indicating means. The emptying indicator means comprise different switches in connection with the dust container or a dust bag. The switch is activated when the weight of the dust container or dust bag is above a certain threshold limit.

US 5235325 A discloses a load indicator for a waste bin. The load indicator is arranged inside the waste bin and weighs the content of the waste bin.

DE 10 2012 110758 A describes a vacuum cleaner containing means for measuring the weight of vacuum cleaner and the dust in the dust filter or filter bag.

### Object of the Invention

It is the purpose of the invention to provide a vacuum cleaner with a device that can be set to indicate when there is collected suction material corresponding to a certain desired weight and a corresponding method.

### Description of the Invention

The object of the invention is achieved by a vacuum cleaner according to independent claim 1 as well as by the method of independent claim 5.

The object of the invention can be achieved in that the vacuum cleaner contains means for determining an increase in the weight of the vacuum cleaner, the means for determining the weight increase being adapted to perform measurements during the operation, the vacuum cleaner containing means for setting a measure for desired weight increase, the vacuum cleaner containing a control panel on which the desired weight increase can be set and displayed via a +/- button with an associated digit display, the control panel being connected to a control unit that can emit an optical and/or acoustical indication in order to indicate to the operator that the desired amount of suction material has been sucked up and that emptying is to be performed.

The vacuum cleaner operator can thereby, for the benefit of work environment and efficiency, optimise the emptying intervals in relation to the rules for "manually handled weight", and at the same time avoid overfilling of the vacuum cleaner.

The weight increase can e.g. be measured by one or more electronic weigh cells that via suitable control electronics continuously weigh the weight of the entire vacuum cleaner, or relevant parts of the vacuum cleaner, and from this subtract the weight of the entire vacuum cleaner or relevant parts thereof when empty of suction material. The weight in empty condition, or tare, can be set e.g. via a pushbutton on the control panel telling the control electronics that the actual weight, when this pushbutton is activated, is to be applied when calculating the weight increase or as origin for the weight increase measurement.

The desired weight limit can be set e.g. via a +/- button with associated digit display. By suspending the vacuum cleaner or relevant parts thereof in the wheel frame in a way allowing free vertical movement, the weight of the vacuum cleaner or relevant parts thereof be loaded on at least one weigh cell which limits the free vertical movement in downward direction.

By mounting at least one weigh cell in this way between the vacuum cleaner and the wheel frame under the vacuum cleaner, the weigh cell or cells can continuously measure the weight of the vacuum cleaner or relevant parts thereof while the vacuum cleaner is operating.

This allows the weight increase to be monitored continuously during the use of the vacuum cleaner, and the operator is thereby advised when the set value for the weight increase is reached. In addition, it is avoided that the vacuum cleaner is overfilled and that the operator is overloaded by heavy lifting.

Alternatively, a weigh cell is mounted between each wheel on the wheel frame of the vacuum cleaner and the wheel frame. The weigh cells are hereby measuring the entire weight increase of the vacuum cleaner. It is therefore of no significance if the vacuum cleaner or relevant parts thereof are suspended in the wheel frame in a way allowing free vertical movement.

The object of the invention is additionally achieved by a method for indicating a degree of filling of a vacuum cleaner, the vacuum cleaner including means for measuring the weight of collected suction material and a display, such as a digit display, for displaying a signal, the method including that the means of the vacuum cleaner for determining the weight increase of the vacuum cleaner perform measurements during operation of the vacuum cleaner, and compare the measurements with a previously set measure for desired weight increase, as a control panel is connected to a control unit receiving signals from the means of the vacuum cleaner for measuring weight for measuring the actual weight increase. When the actual weight increase reaches the same measure as the desired weight increase, the control unit can emit an optical and/or acoustical indication in order to indicate to the operator that the desired amount of suction material has been sucked up and that emptying is to be performed.

It is preferred that the measure for the weight increase can be set on the control panel of the vacuum cleaner, as this enable individual adjustment thereof relative to the type of suction material to be collected and/or to the individual preferences of the operator. It is thus possible for the operator to set a different value for the weight of suction material in the container compared with the current threshold value for heavy lifts, e.g. if the volume of the suction material is so large that the receiver is filled before reaching the maximum limit for the weight, or if the operator for ergonomic reasons wishes to let the container weigh less than the threshold value for heavy lift when he/she handles and lifts the receiver in connection with the emptying of the latter.

### Description of the Drawing

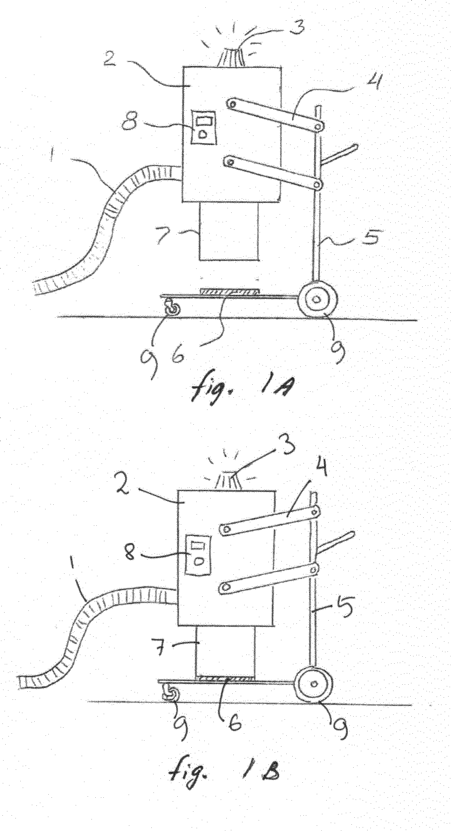

Fig. 1 shows a possible functional drawing of the emptying indicator of the vacuum cleaner.

### Detailed Description of Embodiments of the Invention

Fig. 1 shows a possible embodiment of the vacuum cleaner in emptying position (Fig. 1A) and operating position (Fig. 1B). The suction hose 1 conducts suction material to the vacuum cleaner 2 where the suction material is gathered in the receiver 7. The vacuum cleaner 2 is suspended in the wheel frame 5 via a guide system 4 allowing vertical movement. The weigh cell 6 communicates with the control 8 which can emit a signal via the indicator 3.

When the arrangement is in operating position (Fig. 1B), the weight of vacuum cleaner 2 and receiver 7 together with the weight of the suction material are loaded on the weigh cell 6. The weigh cell 6 transmits a weight signal to the control 8. On the control 8 the weighing system can be reset - tared - and the desired amount of suction material can be set, and when the control 8 detects a weight increase corresponding to the set amount, the control 8 emits a signal via the indicator 3. The operator is thus given notice that the receiver now contains the set amount of suction material and is therefore to be emptied.

Another possible embodiment can e.g. consist of equipping the wheels of the wheel frame with each their weigh cell. Hereby it is not significant if the suspension of the vacuum cleaner allows vertical movement.

## Claims

1. A vacuum cleaner (2) containing at least one electric motor for driving at least one air pump, wherein the air pump can suck air through at least one filter communicating with a receiver (7), the receiver (7) being equipped with a suction branch connecting a suction hose (1) to the operating/suction area of the vacuum cleaner, the vacuum cleaner (2) including means (6) for measuring the weight of suction material in the receiver (7) and a display for displaying a signal, **characterised in that** the vacuum cleaner (2) contains means (6) for determining an increase in the weight of the vacuum cleaner, the means (6) for determining the weight increase adapted to perform measurements during the operation, the vacuum cleaner (2) containing means for setting a measure for desired weight increase, the vacuum cleaner (2) containing a control panel (8) on which the desired weight increase can be set and displayed via a +/- button with an associated digit display, the control panel (8) being connected to a control unit that can measure and/or calculate the actual weight increase of vacuum cleaner (2) and compare it with the measure for the desired weight increase set on the control panel (8), the control unit capable of emitting an optical and/or acoustical indication (3) when the actual weight increase reaches the same measure as the desired weight increase set on the control panel (8) as an indication to the operator that the desired amount of suction material has been sucked up and that emptying is to be performed.

2. Vacuum cleaner according to claim 1, **characterised in that** the means for determining the weight increase of the vacuum cleaner includes one or more weigh cells (6).

3. Vacuum cleaner according to claim 1 or 2, **characterised in that** at least one weigh cell (6) is mounted between the wheel frame (5) of the vacuum cleaner and the vacuum cleaner (2).

4. Vacuum cleaner according to claim 1 or 2, **characterised in that** a weigh cell is mounted between each wheel (9) on the wheel frame (5) of the vacuum cleaner and the wheel frame (5).

5. A method for indicating a desired degree of filling of a receiver (7) in a vacuum cleaner (2), the vacuum cleaner (2) including means (6) for measuring the weight of collected suction material represented by an increase in weight of the vacuum cleaner, and a display, such as a digit display, for displaying a signal (3), the method including that the means (6) of the vacuum cleaner (2) for determining the weight increase of the vacuum cleaner perform measurements during operation of the vacuum cleaner (2), and compare the measurements with a previously set measure for desired weight increase, as a control panel (8) is connected to a control unit that also receives signals from the means (6) of the vacuum cleaner (2) for measuring weight for determining the actual weight increase of the vacuum cleaner, the control unit being capable of emitting an optical and/or acoustical indication (3) when the actual weight increase reaches the same measure as the desired weight increase set on the control panel (8) in order to indicate to the operator that the desired amount of suction material has been sucked up and that emptying is to be performed.

6. Method according to claim 5, **characterised in that** the measure for the weight increase is set on the control panel (8) of the vacuum cleaner.

7. Method according to claim 5 or 6, **characterised in that** one or more weigh cells (6) are mounted between the wheel frame (5) of the vacuum cleaner and the vacuum cleaner (2).

8. Method according to claim 5 or 6, **characterised in that** between each wheel (9) on the wheel frame (5) of the vacuum cleaner and the wheel frame (5) one or more weigh cells are mounted, and that the weigh cells together thereby measure the entire weight increase of the vacuum cleaner (2).

## Patentansprüche

1. Staubsauger (2), der mindestens einen Elektromotor zum Antreiben mindestens einer Luftpumpe enthält, wobei die Luftpumpe Luft durch mindestens einen Filter saugen kann, der mit einem Empfänger (7) kommuniziert, wobei der Empfänger (7) mit einem Saugabzweig ausgerüstet ist, der einen Saugschlauch (1) mit dem Betriebs-/Saugbereich des Staubsaugers verbindet, wobei der Staubsauger (2) Mittel (6) zum Messen des Gewichts von Saugmaterial in dem Empfänger (7) und eine Ausgabe zum Darstellen eines Signals beinhaltet, **dadurch gekennzeichnet, dass** der Staubsauger (2) Mittel (6) zum Bestimmen einer Zunahme des Gewichts des Staubsaugers enthält, wobei die Mittel (6) zum Bestimmen der Gewichtszunahme dazu angepasst sind, Messungen während des Betriebs durchzuführen, der Staubsauger (2) Mittel zum Einstellen eines Messwerts für eine gewünschte Gewichtszunahme enthält und der Staubsauger (2) eine Steuertafel (8) enthält, an welcher die gewünschte Gewichtszunahme eingestellt und über einen +/- Knopf mit einer assoziierten Zahlenausgabe dargestellt werden kann, wobei die Steuertafel (8) mit einer Steuereinheit verbunden ist, die die aktuelle Gewichtszunahme des Staubsaugers (2) messen und/oder berechnen und mit dem Messwert für die gewünschte Gewichtszunahme vergleichen kann, die an der Steuertafel (8) eingestellt wurde, wobei die Steuereinheit dazu in Lage ist, eine optische und/oder akustische Anzeige (3) als einen Anzeige für den Bediener zu emittieren, dass die gewünschte Menge von Saugmaterial eingesaugt wurde und ein Entleeren durchzuführen ist, wenn die aktuelle Gewichtszunahme den gleichen Messwert wie die gewünschte Gewichtszunahme erreicht, die an der Steuertafel (8) eingestellt wurde.

2. Staubsauger nach Anspruch 1, **dadurch gekennzeichnet, dass** die Mittel zum Bestimmen der Gewichtszunahme des Staubsaugers eine oder mehrere Wägezellen (6) beinhalten.

3. Staubsauger nach Anspruch 1 oder 2, **dadurch gekennzeichnet, dass** die mindestens eine Wägezelle (6) zwischen dem Fahrgestell (5) des Staubsaugers und dem Staubsauger (2) montiert ist.

4. Staubsauger nach Anspruch 1 oder 2, **dadurch gekennzeichnet, dass** eine Wägezelle zwischen jedem Rad (9) an dem Fahrgestell (5) des Staubsaugers und dem Fahrgestell (5) montiert ist.

5. Verfahren zum Anzeigen eines gewünschten Füllgrads eines Empfängers (7) in einem Staubsauger (2), wobei der Staubsauger (2) Mittel (6) zum Messen des Gewichts von gesammelten Saugmaterial, das durch eine Zunahme eines Gewichts des Staubsaugers repräsentiert wird, und eine Ausgabe, wie etwa eine Zahlenausgabe, zum Darstellen eines Signals (3), beinhaltet, wobei das Verfahren die Mittel (6) des Staubsaugers (2) zum Bestimmen der Gewichtszunahme des Staubsaugers beinhaltet, um während des Betriebs des Staubsaugers (2) Messungen durchzuführen und diese Messungen mit einem vorher eingestellten Messwert für eine gewünschte Gewichtszunahme zu vergleichen, wobei eine Steuertafel (8) mit einer Steuereinheit verbunden ist, die auch Signale von den Mitteln (6) des Staubsaugers (2) zum Messen von Gewicht zum Bestimmen der aktuellen Gewichtszunahme des Staubsaugers empfängt, wobei die Steuereinheit dazu in der Lage ist, eine optische und/oder akustische Anzeige (3) zu emittieren, um dem Bediener anzuzeigen, dass die gewünschte Menge von Saugmaterial eingesaugt wurde und ein Entleeren durchzuführen ist, wenn die aktuelle Gewichtszunahme den gleichen Messwert wie die gewünschte Gewichtszunahme erreicht, die an der Steuertafel (8) eingestellt wurde.

6. Verfahren nach Anspruch 5, **dadurch gekennzeichnet, dass** der Messwert für die Gewichtszunahme an der Steuertafel (8) des Staubsaugers eingestellt wird.

7. Verfahren nach Anspruch 5 oder 6, **dadurch gekennzeichnet, dass** die eine oder die mehreren Wägezellen (6) zwischen dem Fahrgestell (5) des Staubsaugers und dem Staubsauger (2) montiert sind.

8. Verfahren nach Anspruch 5 oder 6, **dadurch gekennzeichnet, dass** zwischen jedem Rad (9) an dem Fahrgestell (5) des Staubsaugers und dem Fahrgestell (5) eine oder mehrere Wägezellen montiert sind, und dadurch, dass diese Wägezellen somit zusammen die Gesamtgewichtszunahme des Staubsaugers (2) messen.

## Revendications

1. Aspirateur (2) contenant au moins un moteur électrique pour l'entraînement d'au moins une pompe à air, dans lequel la pompe à air peut aspirer l'air à travers au moins un filtre communiquant avec un récepteur (7), le récepteur (7) étant équipé d'une branche d'aspiration reliant un tuyau d'aspiration (1) à la zone de fonctionnement/aspiration de l'aspirateur, l'aspirateur (2) incluant un moyen (6) de mesure du poids de matériau d'aspiration dans le récepteur (7) et un écran d'affichage d'un signal, **caractérisé en ce que** l'aspirateur (2) contient un moyen (6) de détermination d'une augmentation du poids de l'aspirateur, le moyen (6) de détermination de l'augmentation de poids étant adapté pour réaliser des mesures pendant le fonctionnement, l'aspirateur (2) contenant un moyen de réglage d'une mesure pour l'augmentation de poids souhaitée, l'aspirateur (2) contenant un panneau de commande (8) sur lequel l'augmentation de poids souhaitée peut être réglée et affichée via un bouton +/- avec un écran à chiffres associé, le panneau de commande (8) étant relié à une unité de commande qui peut mesurer et/ou calculer l'augmentation de poids réelle de l'aspirateur (2) et la comparer à la mesure pour l'augmentation de poids souhaitée réglée sur le panneau de commande (8), l'unité de commande étant capable d'émettre une indication optique et/ou acoustique (3) lorsque l'augmentation de poids réelle atteint la même mesure que l'augmentation de poids souhaitée réglée sur le panneau de commande (8) en tant qu'indication pour l'opérateur que la quantité de matériau d'aspiration souhaitée a été aspirée et que le vidage doit être réalisé.

2. Aspirateur selon la revendication 1, **caractérisé en ce que** le moyen de détermination de l'augmentation de poids de l'aspirateur inclut une ou plusieurs cellules de pesage (6).

3. Aspirateur selon la revendication 1 ou 2, **caractérisé en ce qu'**au moins une cellule de pesage (6) est montée entre le cadre de roue (5) de l'aspirateur et l'aspirateur (2).

4. Aspirateur selon la revendication 1 ou 2, **caractérisé en ce qu'**une cellule de pesage est montée entre chaque roue (9) sur le cadre de roue (5) de l'aspirateur et le cadre de roue (5).

5. Procédé d'indication d'un degré de remplissage souhaité d'un récepteur (7) dans un aspirateur (2), l'aspirateur (2) incluant un moyen (6) de mesure du poids de matériau d'aspiration collecté représenté par une augmentation de poids de l'aspirateur, et un écran, tel qu'un écran à chiffres, pour l'affichage d'un signal (3), le procédé incluant le fait que les moyens (6) de l'aspiration (2) de détermination de l'augmentation de poids de l'aspirateur réalisent des mesures pendant le fonctionnement de l'aspirateur (2), et comparent les mesures à une mesure réglée précédemment pour l'augmentation de poids souhaitée, lorsqu'un panneau de commande (8) est relié à une unité de commande qui reçoit aussi des signaux du moyen (6) de l'aspirateur (2) de mesure du poids pour déterminer l'augmentation de poids réelle de l'aspirateur, l'unité de commande étant capable d'émettre une indication optique et/ou acoustique (3) lorsque l'augmentation de poids réelle atteint la même mesure que l'augmentation de poids souhaitée réglée sur le panneau de commande (8) afin d'indiquer à l'opérateur que la quantité de matériau d'aspiration souhaitée a été aspirée et que le vidage doit être réalisé.

6. Procédé selon la revendication 5, **caractérisé en ce que** la mesure pour l'augmentation de poids est réglée sur le panneau de commande (8) de l'aspirateur.

7. Procédé selon la revendication 5 ou 6, **caractérisé en ce qu'**une ou plusieurs cellules de pesage (6) sont montées entre le cadre de roue (5) de l'aspirateur et l'aspirateur (2).

8. Procédé selon la revendication 5 ou 6, **caractérisé en ce qu'**une ou plusieurs cellules de pesage sont montées entre chaque roue (9) sur le cadre de roue (5) de l'aspirateur et le cadre de roue (5), et que les cellules de pesage mesurent ce faisant ensemble l'ensemble de l'augmentation de poids de l'aspirateur (2).
